# EUROPÄISCHE PATENTANMELDUNG

(11) **EP 2 460 608 A1**
(43) Veröffentlichungstag der Anmeldung: **06.06.2012**
(21) Anmeldenummer: 10193581.5
(22) Anmeldetag: 03.12.2010
(51) Int. Cl.: B22F 3/105, B22F 5/12, B29C 67/00

(54) **Herstellung von einem Draht mittels Rapid Prototypingverfahren, Draht und Schweißverfahren**

(71) Anmelder: Siemens Aktiengesellschaft, 80333 München (DE)
(72) Erfinder: Arjakine, Nikolai, 10555, Berlin (DE)

(57) **Zusammenfassung**

Durch die Verwendung eines Rapid Prototypingverfahrens können gegenüber der gießtechnischen Herstellung von Drähten die Herstellungszeit und Herstellungskosten enorm reduziert werden.

## Beschreibung

Die Erfindung betrifft das Herstellen von einem Draht aus schmelzbaren Legierungen mittels eines Rapid Prototypingverfahrens, einen Draht und ein Schweißverfahren.

Für die Reparatur von betriebsbeanspruchten Bauteilen aus Gusslegierungen (z.B. Ni- oder Co Basissuperlegierungen) werden verschiedene Schweißverfahren angewendet. Um das fehlende Material wiederherzustellen, muss in den Schweißbereich ein Zusatzwerkstoff gegeben werden. Im Fall der angestrebten Schweißreparaturen von den Komponenten aus Gusslegierungen mit artgleichen Zusatzwerkstoffen werden zurzeit meistens nur pulverartige Zusatzwerkstoffe verwendet. Bei den Gusslegierungen ist die Nutzung von Drahtzusatzwerkstoffen beschränkt. Der Grund dafür ist, dass die Herstellung von Drähten mit gewünschten Durchmessern technologisch sehr aufwändig und dadurch mit hohen Kosten verbunden ist. Anwendung von Schweißzusätzen in Drahtform erhöht die Flexibilität des Einsatzes von Lasertechnologien. So können moderne mobile Lasersysteme mit der sogenannten "Touch in" Funktion als Alternativverfahren zu dem konventionellen WIG-Schweißreparaturverfahren eingesetzt werden. Lasersysteme mit Pulverzufuhr sind meist stationäre Anlagen, welche für "Standard" Reparaturen verwendet werden. Dabei ist Programmieraufwand für die Bahngenerierung je nach Anwendung ziemlich groß.

Zurzeit werden Schweißdrähte aus Gusslegierungen durch sehr aufwändige Technologie durch Gießen und dem anschließenden Schleifen bzw. Erodieren auf geforderten Durchmesser hergestellt. Die Herstellkosten sind sehr hoch, so dass die Verwendung von verschiedenen Drähten zur Erprobung nicht wirtschaftlich sein kann. Außerdem ist der minimal möglich herstellbare Durchmesser begrenzt.

Es ist daher Aufgabe der Erfindung oben genanntes Problem zu lösen.

Die Aufgabe wird gelöst durch ein Verfahren gemäß Anspruch 1, durch einen Draht gemäß Anspruch 8 und ein Schweißverfahren nach Anspruch 9.

In den Unteransprüchen sind weitere vorteilhafte Maßnahmen aufgelistet, die beliebig miteinander kombiniert werden können um weitere Vorteile zu erzielen.

Es zeigen:
- Figur 1: schematisch die Durchführung des Verfahrens,
- Figur 2: eine Gasturbine,
- Figur 3: eine Turbinenschaufel,
- Figur 4: eine Liste von Superlegierungen.

Die Beschreibung und die Figuren stellen nur Ausführungsbeispiele der Erfindung dar.

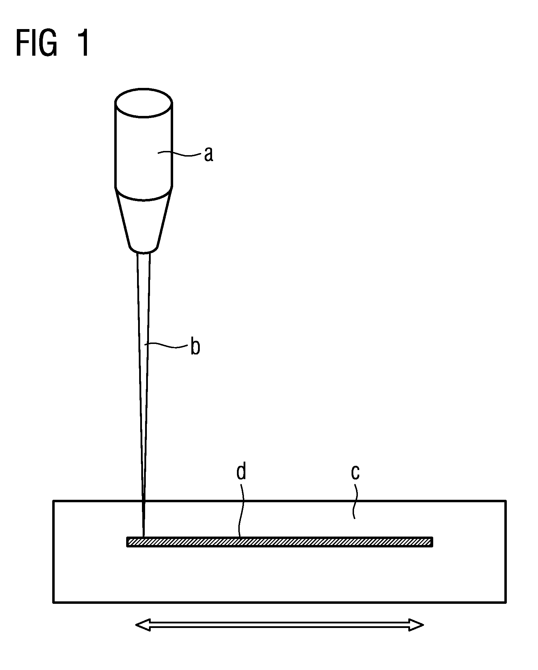

Figur 1 zeigt schematisch die Durchführung des Verfahrens. Es wird ein Pulverbett c zur Verfügung gestellt, das mittels eines Laserstrahls b (Laser hier vorzugsweise und nur beispielhaft verwendet) oder eines Elektronenstrahls einer Energiequelle vorzugsweise eines Laserbrenners a bestrahlt wird und verdichtet wird. Dies kann ein Versintern und/oder Schmelzen darstellen.

Der Laserstrahl b wird auf eine bestimmte Weite auf Höhe des Pulverbetts c eingestellt, so dass ein Draht d mit einer gewissen Ausdehnung entsteht. Durchmesser, Dicke oder Querschnitte sind dem Fachmann bekannt und können auch kleiner als gewöhnlich hergestellt werden.

Der Draht d muss zwangsläufig nicht rund im Querschnitt sein. Eine Dicke des Drahtes d kann durch die Leistung der Energiequelle (Laser) eingestellt werden oder durch Aufbringen einer weiteren Pulverschicht auf das Pulverbett, wobei dann die über dem bereits verdichteten Material aufgebrachte Pulverschicht wieder verdichtet wird und mit dem vorherigen verbunden wird, so dass eine größere Dicke in zwei Verfahrenschritten entsteht.

Ebenso kann durch Führen des Lasers a neben einem bereits verdichteten Bereich die Breite des Drahts d vergrößert werden oder der Laserstrahl wird direkt auf die gewünschte Dicke aufgeweitet.

Die Zusammensetzung des Pulverbetts kann entlang der Richtung e variiert werden. Somit kann sehr schnell und flexibel ein Draht d, insbesondere ein Schweißdraht mit der gewünschten chemischen Zusammensetzung hergestellt werden oder eine Versuchsreihe mit verschiedenen chemischen Zusammensetzungen mit einem Draht d durchgeführt werden und das Schweißverfahren ohne Unterbrechungen durchgeführt wird.

Der Draht weist dann vorzugsweise lokal unterschiedliche Zusammensetzungen auf, die sich deutlich von bekannten Schwankungen der Zusammensetzung des Pulverbetts oder Verfahrensschwankungen des Verdichtungsprozesses unterscheiden.

Typische Durchmesser für den Draht d sind dem Fachmann bekannt jedenfalls so, dass er hinreichend flexibel ist.

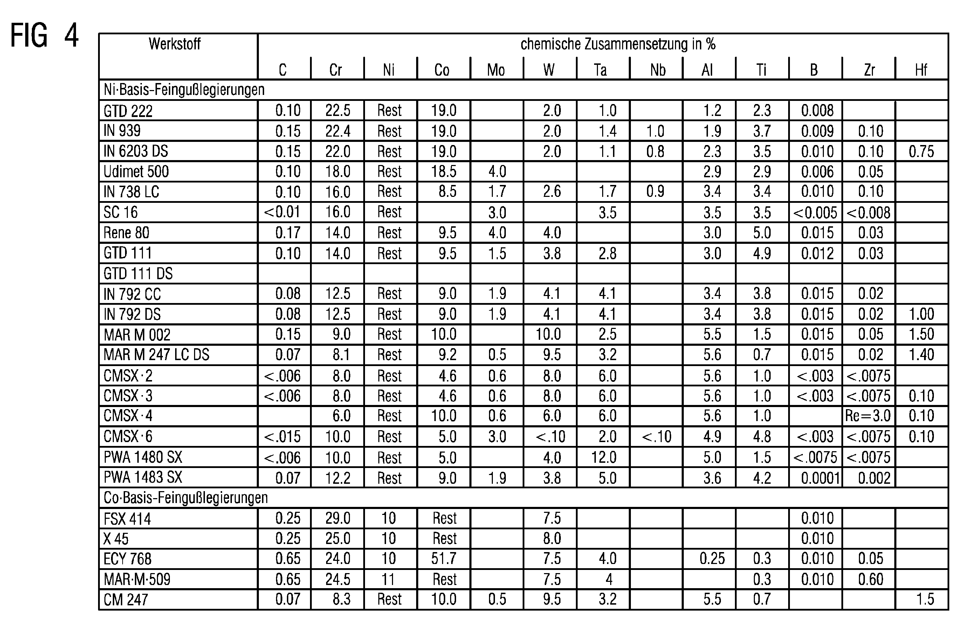

Vorzugsweise wird ein solcher Draht d zum Schweißen verwendet werden und weist vorzugsweise ähnliche oder gleiche Zusammensetzungen wie legierungen in Figur 4 auf.

Vorzugsweise wird der Draht d auch zum Schweißen von nickel- oder kobaltbasierten Substraten, insbesondere gemäß Figur 4 verwendet.

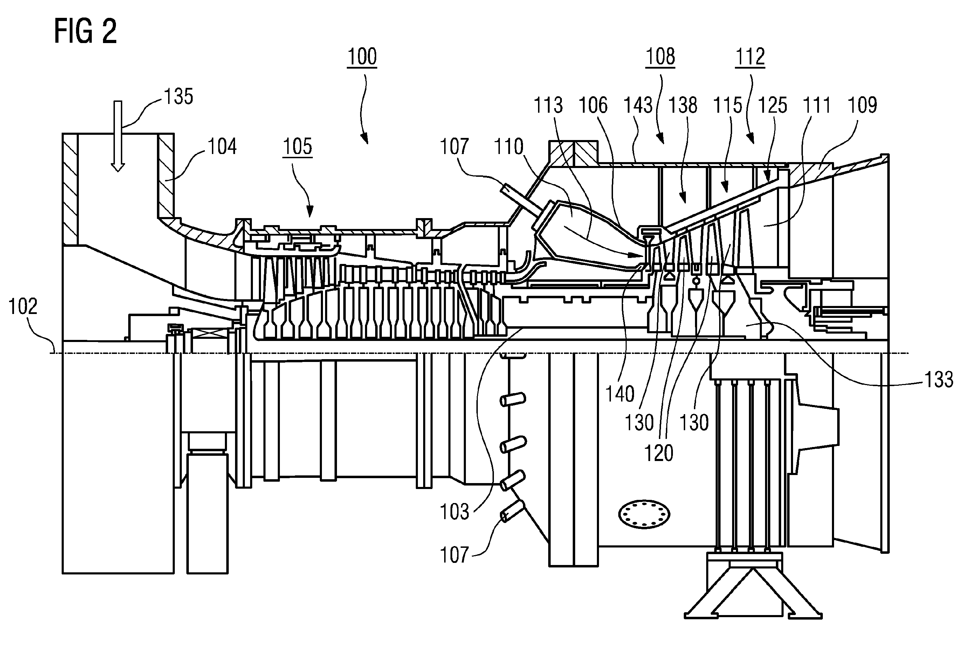

Die Figur 2 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

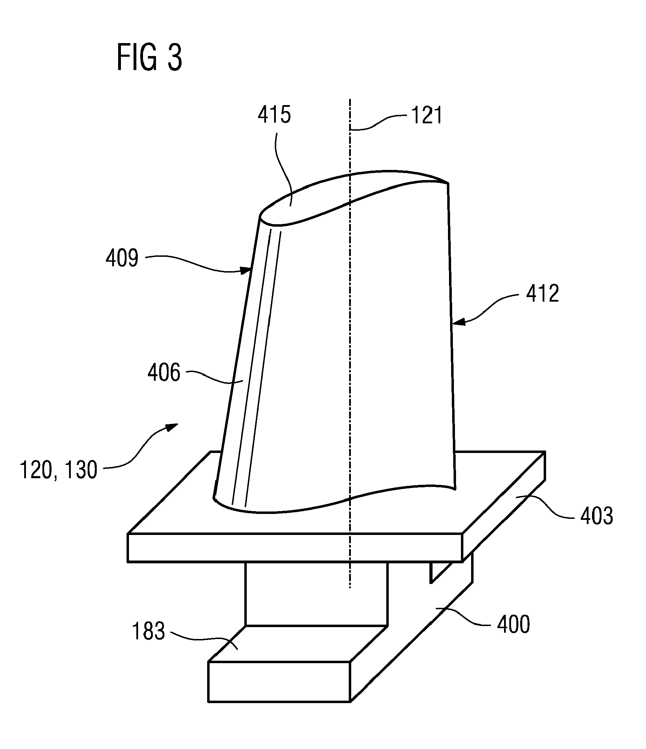

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zur Herstellung eines Drahts (d),
bei dem in einem Pulverbett (c) lokal Material verdichtet wird,
so dass der Draht (d) entsteht.

2. Verfahren nach Anspruch 1,
bei dem das Material des Pulverbetts (c) versintert wird.

3. Verfahren nach Anspruch 1 oder 2,
bei dem das Material des Pulverbetts (c) aufgeschmolzen wird.

4. Verfahren nach Anspruch 1, 2 oder 3,
bei dem Laser- oder Elektronenstrahlen (b) zur Verdichtung von Material verwendet werden.

5. Verfahren nach Anspruch 4,
bei dem die Leistung und Breite des Strahlfleckes auf dem Pulverbett (c) der gewünschten lokalen Geometrie des Drahtes (d) angepasst wird.

6. Verfahren nach einem oder mehreren der Ansprüche 1, 2, 3, 4 oder 5,
bei dem das Pulverbett (c),
vorzugsweise entlang der Länge des Drahts (d),
lokal unterschiedliche Zusammensetzungen aufweist,
so dass der Draht (d) lokal unterschiedliche Zusammensetzungen aufweist.

7. Verfahren nach einem oder mehreren der Ansprüche 1, 2, 3, 4, 5 oder 6,
bei dem Material entlang einer Mäanderform verdichtet wird.

8. Draht,
insbesondere ein Schweißdraht,
insbesondere hergestellt nach einem oder mehreren der Ansprüche 1, 2, 3, 4, 5, 6 oder 7,
dessen Zusammensetzung entlang seiner Länge verschieden ist.

9. Verfahren zum Schweißen,
bei dem ein Draht hergestellt nach einem oder mehreren der Ansprüche 1 bis 7 oder nach Anspruch 8 verwendet wird.
